# EUROPÄISCHE PATENTSCHRIFT

(11) **EP 3 873 697 B1**
(45) Veröffentlichungstag und Bekanntmachung des Hinweises auf die Patenterteilung: **04.09.2024**
(21) Anmeldenummer: 19784034.1
(22) Anmeldetag: 07.10.2019
(51) Int. Cl.: B23Q 11/00

(54) **SICHERHEITSBREMSVORRICHTUNG MIT ZWEI BREMSSTUFEN**
SAFETY BRAKING DEVICE WITH TWO BRAKING STAGES
DISPOSITIF DE FREINAGE DE SÉCURITÉ DOTÉ DE DEUX PALIERS DE FREINAGE

(30) Priorität: 31.10.2018 DE 102018218725
(43) Veröffentlichungstag der Anmeldung: 08.09.2021
(73) Patentinhaber: Robert Bosch GmbH, 70442 Stuttgart (DE)
(72) Erfinder: WIKER, Juergen, 70374 Stuttgart (DE); DENNIS, Daniel, 72622 Nuertingen (DE); ESENWEIN, Florian, 70771 Leinfelden-Echterdingen (DE)
(86) Internationale Anmeldenummer: PCT/EP2019/077005
(87) Internationale Veröffentlichungsnummer: WO 2020/088883

(56) Entgegenhaltungen:
- EP-A2- 2 397 271
- WO-A1-2009/040152
- DE-A1- 19 809 939
- DE-T2- 602004 005 115

## Beschreibung

Die Erfindung betrifft eine Sicherheitsbremsvorrichtung für eine Werkzeugmaschine.

### Stand der Technik

Sicherheitsbremsvorrichtungen sind aus dem Stand der Technik bekannt, beispielsweise aus DE 10 2008 054 694 A1, oder die DE 60 2004 005115 T2, die die Basis für den Oberbegriff des Anspruchs 1 bildet.

### Offenbarung der Erfindung

Die Erfindung geht aus von einer Sicherheitsbremsvorrichtung für eine Werkzeugmaschine zum Bremsen eines mittels eines Elektromotors über eine Abtriebseinheit, insbesondere eine Abtriebswelle, angetriebenen, insbesondere rotierend angetriebenen, Bearbeitungswerkzeugs, aufweisend zumindest eine Bremsvorrichtung, die dazu vorgesehen ist, bei einem Bremsvorgang eine Rotation der Abtriebseinheit zu bremsen, insbesondere zu stoppen. Erfindungsgemäß weist die Bremsvorrichtung zumindest eine erste Bremsstufe und eine zweite Bremsstufe auf.

Unter einer "Sicherheitsbremsvorrichtung" soll insbesondere eine Vorrichtung verstanden werden, die ein Bearbeitungswerkzeug in einer Situation, in der Gefahr von dem Bearbeitungswerkzeug für einen Benutzer besteht, mittels zumindest der Bremsvorrichtung bremst oder stoppt. Insbesondere bremst die Sicherheitsbremsvorrichtung das Bearbeitungswerkzeug bei einer Annäherung oder Berührung des Bearbeitungswerkzeugs durch einen Benutzer. Die Sicherheitsbremsvorrichtung kann als separate Einrichtung zur Verwendung in einer Werkzeugmaschine oder auch als Teil einer Steuervorrichtung einer Werkzeugmaschine realisiert sein. In einer Ausführungsform umfasst die Sicherheitsbremsvorrichtung ferner eine Recheneinheit und eine Sensoreinheit, wobei die Recheneinheit mit zumindest einem Sensor der Sensoreinheit kommuniziert. Der Sensor ist dazu vorgesehen, eine Gefahr für einen Benutzer, insbesondere eine Annäherung des Benutzers an das Bearbeitungswerkzeug und/oder eine Berührung des Bearbeitungswerkzeugs durch den Benutzer, zu detektieren. Entsprechend gibt die Sensorvorrichtung ein Detektionssignal an die Sicherheitsbremsvorrichtung aus. Eine Elektronik der Sicherheitsbremsvorrichtung, insbesondere die Recheneinheit, dient der Steuerung der Bremsvorrichtung. Insbesondere ist die Elektronik der Sicherheitsbremsvorrichtung, insbesondere die Recheneinheit, dazu vorgesehen, nach Detektion einer Annäherung des Benutzers an das Bearbeitungswerkzeug und/oder nach Detektion eines Kontakts des Benutzers mit dem Bearbeitungswerkzeug, einen Bremsvorgang zu initiieren, zu steuern und/oder zu regeln.

Unter "vorgesehen" soll insbesondere speziell ausgestattet, ausgelegt und/oder programmiert verstanden werden.

Unter einer "Werkzeugmaschine" soll eine prinzipiell beliebige Werkzeugmaschine verstanden werden, die ein mittels eines Elektromotors über eine Abtriebseinheit, insbesondere eine Abtriebswelle, angetriebenes, drehbar gelagertes Bearbeitungswerkzeug aufweist. Insbesondere kann die Werkzeugmaschine eine netzbetriebene oder eine kabellose, akkubetriebene Werkzeugmaschine sein. Das Bearbeitungswerkzeug kann insbesondere auch als Werkzeugaufnahme realisiert sein. Das Bearbeitungswerkzeug ist im Wesentlichen drehfest mit der Abtriebseinheit verbunden oder zumindest in einem Betriebszustand der Werkzeugmaschine im Wesentlichen drehfest mit der Abtriebseinheit verbindbar, beispielsweise über eine Werkzeugaufnahme, sodass ein Drehmoment von der Abtriebseinheit, insbesondere der Abtriebswelle, auf das Bearbeitungswerkzeug übertragbar ist. Unter "im Wesentlichen drehfest" ist an dieser Stelle zu verstehen, dass das Bearbeitungswerkzeug in einem Bremsvorgang gegenüber der Abtriebseinheit eine Relativrotation von weniger als 15°, insbesondere von weniger als 10°, ganz insbesondere von weniger al 5° vollführt. Unter einer "Abtriebseinheit" soll insbesondere eine Vorrichtung verstanden werden, die dazu vorgesehen ist, ein Drehmoment auf die Abtriebswelle zu übertragen. Beispielsweise kann die Abtriebseinheit als eine Getriebestufe ausgebildet sein. Das Drehmoment wird von dem Elektromotor, insbesondere einem bürstenlosen Gleichstrommotor (,brushless DC motor" (BLDC-Motor) oder ,electronically commutated motor" (EC-Motor)) oder alternativ einem AC-Motor (Universalmotor), erzeugt. Unter Verwendung eines EC-Motors kann ein direktantrieb der Abtriebseinheit, insbesondere der Abtriebswelle, ohne Zwischenschaltung eines Getriebes oder einer Kupplung realisiert werden. Derart kann vorteilhaft auf die Komponenten des Getriebes oder der Kupplung verzichtet werden, sodass eine kompaktere, leichtere und günstigere Werkzeugmaschine realisierbar ist. Ferner kann vorteilhaft eine während eines Bremsvorgangs abzubremsende Rotationsmasse und/oder Rotationsenergie der An- und/oder Abtriebseinheit reduziert werden und damit eine besonders kurze Zeit, bis das Bearbeitungswerkzeug zum Stillstand gebracht ist, erreicht werden. Es sei angemerkt, dass derartige Elektromotoren dem Fachmann bekannt sind. Die Abtriebseinheit, insbesondere eine Abtriebswelle, ermöglicht eine Rotation des Bearbeitungswerkzeugs durch Drehung zumindest der Abtriebswelle um ihre Längsachse. Beispiele derartiger Werkzeugmaschinen umfassen insbesondere Bohrmaschinen, Motorsensen, Rasenmäher, Kreissägen, Tischkreissägen, Kappsägen, Gehrungssägen oder andere dem Fachmann als sinnvoll erscheinende Werkzeugmaschinen. In einer Ausführungsform kann die Werkzeugmaschine als handgehaltene Handwerkzeugmaschine realisiert sein, beispielsweise als kabellose akkubetriebene Handkreissäge oder dergleichen. In einem Ausführungsbeispiel kann die Werkzeugmaschine als eine Handkreissäge mit einem mittels des Elektromotors über eine Abtriebswelle angetriebenen, als Kreissägeblatt ausgebildeten Bearbeitungswerkzeug und mit einer Sensorplatte, die eine Annährung eines Benutzers an das Kreissägeblatt sowie einen Kontakt eines Körperteils des Benutzers mit dem Bearbeitungswerkzeug erfasst, realisiert sein.

Unter einer "Bremsvorrichtung" ist eine Vorrichtung zu verstehen, die der Abbremsung oder dem Stoppen der Rotation des Bearbeitungswerkzeugs im Falle der Detektion einer Annäherung oder Berührung des Bearbeitungswerkzeugs durch einen Benutzer dient. Unter "bremsen" ist insbesondere eine Reduzierung der Drehgeschwindigkeit bzw. Rotationsgeschwindigkeit des Bearbeitungswerkzeugs zu verstehen. Unter "stoppen" ist insbesondere zu verstehen, dass das Bearbeitungswerkzeug zumindest so stark abgebremst wird, dass eine verbleibende Umdrehungsfrequenz kleiner als 0,5 Hz, bevorzugt kleiner als 0,1 Hz beträgt. Bevorzugt bezeichnet "stoppen" das Erreichen des Stillstands des Bearbeitungswerkzeugs bezüglich dessen Rotationsbewegung. Der Stillstand kennzeichnet dabei das erstmalige Erreichen des Nullpunkts der Drehgeschwindigkeit der Abtriebswelle, unabhängig davon, ob anschließend noch eine (geringfügige) Rotation der Antriebswelle - beispielsweise auf Grund von Materialrelaxationseffekten - auftritt.

Die Bremsvorrichtung ist als zumindest zweistufige Bremsvorrichtung realisiert.

Die Bremsvorrichtung weist daher zumindest eine erste Bremsstufe und eine zweite Bremsstufe auf. Unter einer "Bremsstufe" ist insbesondere eine Implementierung der Sicherheitsvorrichtung zu verstehen, die eine für die Bremsstufe charakteristische Bremswirkung auf die Abtriebseinheit, insbesondere eine Abtriebswelle, ausübbar macht. Insbesondere kann eine Bremsstufe als ein Betriebsmodus oder Bremsmodus der Sicherheitsbremsvorrichtung verstanden werden. In einer Ausführungsform sind die erste Bremsstufe und die zweite Bremsstufe hinsichtlich einer in einem Bremsvorgang ausübbaren bzw. ausgeübten Bremswirkung unterschiedlich. So kann beispielsweise in einer Ausführungsform die erste Bremsstufe mit einer leichten Bremswirkung und die zweite Bremsstufe mit einer starken Bremswirkung realisiert sein.

Erfindungsgemäß ist die Bremsvorrichtung dazu vorgesehen, in einem Bremsvorgang die erste Bremsstufe anzuwenden, sobald eine Annäherung eines Benutzers an das Bearbeitungswerkzeug durch die Sensorvorrichtung erkannt bzw. detektiert wird. In diesem Falle wird die Rotation der Abtriebseinheit im Wesentlichen mittels oder unter Anwendung der ersten Bremsstufe der Bremsvorrichtung gebremst, insbesondere gestoppt. Unter "im Wesentlichen" ist hier zu verstehen, dass die auf die Abtriebseinheit wirkende gesamte Bremswirkung zu mindestens 60 %, insbesondere zu mindestens 80 %, ganz insbesondere zu 100 % mittels oder unter Anwendung der ersten Bremsstufe erzeugbar ist bzw. erzeugt wird. Erfindungsgemäß ist die Bremsvorrichtung dazu vorgesehen, in einem Bremsvorgang die zweite Bremsstufe anzuwenden, sobald eine weitere Annäherung eines Benutzers an das Bearbeitungswerkzeug durch die Sensorvorrichtung erkannt bzw. detektiert wird oder insbesondere eine Berührung des Bearbeitungswerkzeugs durch ein Körperteil des Benutzers detektiert wird. In diesem Falle wird die Rotation der Abtriebseinheit im Wesentlichen mittels oder unter Anwendung der zweiten Bremsstufe der Bremsvorrichtung gebremst, insbesondere gestoppt. Unter "im Wesentlichen" ist hier zu verstehen, dass die auf die Abtriebseinheit wirkende gesamte Bremswirkung zu mindestens 60 %, insbesondere zu mindestens 80 %, ganz insbesondere zu 100 % mittels oder unter Anwendung der zweiten Bremsstufe erzeugbar ist bzw. erzeugt wird. Erfindungsgemäß kann somit eine zweistufige Bremsvorrichtung realisiert werden, bei der die erste Bremsstufe bereits für eine Abbremsung des Bearbeitungswerkzeugs und somit für eine Reduzierung der Rotationsenergie sorgt, sobald die Annäherung eines Benutzers an das Bearbeitungswerkzeug detektiert wird. Sollte der Benutzer mit einem Körperteil noch dichter an das Bearbeitungswerkzeug geraten oder dieses gar berühren, erfolgt ein Bremsvorgang (Notbremsvorgang), bei der die zweite Bremsstufe für eine besonders schnelle Abbremsung des rotierenden Bearbeitungswerkzeugs sorgt. Durch die vorgeschaltete erste Bremsstufe ist bis zur weiteren Annäherung oder gar Berührung des Bearbeitungswerkzeugs durch den Körperteil des Benutzers bereits ein Teil der ursprünglichen Rotationsenergie abgebaut. Somit ist folglich eine geringe verbleibende Rotationsenergie bis zu einem Stillstand des Bearbeitungswerkzeugs zu reduzieren, sodass ein schnellerer und sicherer Bremsvorgang erzielt werden kann. Ferner kann, insbesondere im Falle der Realisierung der zweiten Bremsstufe als mechanische Bremsstufe, eine geringe Beanspruchung der mechanischen Komponenten der Bremsstufe erzielt werden. Die zweite Bremsstufe wird somit langlebiger und/oder kann einfacher und kompakter ausgeführt werden. Ferner ist denkbar, dass in einem Bremsvorgang die zweite Bremsstufe nicht benötigt - da der Benutzer sich dem Bearbeitungswerkzeug nicht weiter annähert - und daher nicht zum Einsatz kommt. In diesem Falle kann, insbesondere im Falle der Realisierung der zweiten Bremsstufe als mechanische Bremsstufe, die Werkzeugmaschine einfacher wieder in Betrieb genommen werden, da beispielsweise insbesondere kein Zurücksetzen, Spannen, oder Tauschen von mechanischen Komponenten, insbesondere eines Aktorelements, erforderlich ist. Der Sensor zur Detektion einer Gefahr für einen Benutzer, insbesondere zur Detektion einer Annäherung des Benutzers an das Bearbeitungswerkzeug und/oder einer Berührung des Bearbeitungswerkzeugs durch den Benutzer, kann in einem Ausführungsbeispiel als ein kapazitiv messenden Sensor realisiert sein (beispielsweise mittels eines Wechselfelds). Bei einer Handkreissäge kann beispielsweise
neben dem Sägeblatt (Bearbeitungswerkzeug) eine Sensorplatte beabstandet vom Sägeblatt angeordnet sein, wobei die Sensorplatte dazu vorgesehen ist, eine Annäherung menschlicher Haut an das Sägeblatt und eine Berührung menschlicher Haut mit dem Sägeblatt zu unterscheiden und entsprechende Detektionssignale auszugeben. Insbesondere besitzt die Sensorplatte einen geringen Abstand zum Sägeblatt (von 1 bis 10 mm, insbesondere von 1,5 bis 3 mm, bevorzugt aber von 2 mm) und ist gegenüber dem Gehäuse der Handkreissäge elektrisch isoliert. Die Sensorplatte ist mit einer Elektronik der Handkreissäge elektrisch verbunden, wobei die Elektronik dazu vorgesehen ist, in Reaktion auf die Detektion einer Annäherung menschlicher Haut an das Sägeblatt und der Detektion einer Berührung menschlicher Haut mit dem Sägeblatt einen Bremsvorgang unter Verwendung der ersten Bremsstufe bzw. der zweiten Bremsstufe einzuleiten. Unter einer "weiteren Annäherung" ist insbesondere zu verstehen, dass der Abstand zwischen dem sich dem Bearbeitungswerkzeug nähernden Körperteil des Benutzers und dem Bearbeitungswerkzeug sich verringert.

Erfindungsgemäß ist die erste Bremsstufe der Bremsvorrichtung als elektronische Bremsstufe ausgebildet. Unter einer "elektronischen Bremsstufe" ist insbesondere zu verstehen, dass die Bremswirkung mittels elektronischer Komponenten der Sicherheitsbremsvorrichtung erzeugbar ist bzw. erzeugt wird. In einer Ausführungsform der Sicherheitsbremsvorrichtung ist die erste Bremsstufe der Bremsvorrichtung mittels einer Gegensteuerung des Elektromotors realisiert. Unter einer Gegensteuerung ist insbesondere ein Betrieb des Elektromotors unter Gegenpolung oder alternativ ein Kurzschluss der Windungen des Elektromotors zu verstehen. Derart kann mittels der Elektronik des Elektromotors dieser gebremst werden. Vorteilhaft verwendet die erste Bremsstufe zur Erzeugung einer Bremswirkung bereits in der Werkzeugmaschine vorgesehene Einrichtungen wie beispielsweise den Elektromotor. Derart kann eine besonders einfach und kostengünstig realisierbare und hinsichtlich ihrer Konstruktion besonders kompakte erste Bremsstufe realisiert werden.

In einer Ausführungsform der Sicherheitsbremsvorrichtung ist die erste Bremsstufe der Bremsvorrichtung dazu vorgesehen, bei einem Bremsvorgang eine Rotation der Abtriebseinheit mindestens innerhalb von 1000 Millisekunden zu stoppen, insbesondere mindestens innerhalb von 500 Millisekunden zu stoppen, ganz insbesondere mindestens innerhalb von 200 Millisekunden zu stoppen. Derart kann sichergestellt werden, dass im Falle einer weiteren Annäherung des Benutzers an das rotierende Bearbeitungswerkzeug dieses entsprechend kurzfristig zum Stillstand gebracht wird, bevor der Benutzer das Bearbeitungswerkzeug berührt. Unter "stoppen" ist insbesondere zu verstehen, dass das Bearbeitungswerkzeug zumindest so stark abgebremst wird, dass eine verbleibende Umdrehungsfrequenz kleiner als 0,5 Hz, bevorzugt kleiner als 0,1 Hz beträgt. Bevorzugt bezeichnet "stoppen" das Erreichen des Stillstands des Bearbeitungswerkzeugs bezüglich dessen Rotationsbewegung. Der Stillstand kennzeichnet dabei das erstmalige Erreichen des Nullpunkts der Drehgeschwindigkeit der Abtriebswelle, unabhängig davon, ob anschließend noch eine (geringfügige) Rotation der Antriebswelle - beispielsweise auf Grund von Materialrelaxationseffekten - auftritt.

Erfindungsgemäß ist die zweite Bremsstufe der Bremsvorrichtung als mechanische Bremsstufe mit zumindest einem mechanischen Bremselement ausgebildet. Dabei wird die Bremswirkung durch mechanisches Verzögern oder Blockieren der Rotation der Abtriebseinheit, insbesondere der Abtriebswelle, realisiert. Derart kann ein hoher Strom, wie er zur Erzeugung kurzer Bremszeiten unter Verwendung einer zweiten Bremsstufe basierend auf einer Gegensteuerung eines Elektromotors notwendig wäre, vorteilhaft vermieden werden. Derart hohe Ströme könnten zu einer Beschädigung der Elektronik und/oder des Elektromotors führen, die den Austausch des Elektromotors zur Folge hätten. Mittels der Realisierung der zweiten Bremsstufe als mechanische Bremsstufe kann daher vorteilhaft die Lebensdauer des Werkzeugs erhöht werden. In einem Ausführungsbeispiel kann die mechanische Bremsstufe beispielsweise durch eine zweiteilige Bremsvorrichtung realisiert sein, wobei ein erster Bremsvorrichtungsteil und ein zweiter Bremsvorrichtungsteil als komplementäre Bestandteile einer zumindest zweiteiligen Klauenkupplung (oder dazu äquivalent: Klauenbremse) ausgebildet sind, wobei der erste Bremsvorrichtungsteil und der zweite Bremsvorrichtungsteil jeweils zumindest ein Verzahnungselement aufweisen, die dazu vorgesehen sind, bei einem Bremsvorgang ineinander in Eingriff zu stehen und derart eine Rotation der Abtriebseinheit zu bremsen, insbesondere zu stoppen. Der erste Bremsvorrichtungsteil bildet dabei einen ersten Klauenkupplungsteil und der zweite Bremsvorrichtungsteil bildet dabei einen zweiten Klauenkupplungsteil. Unter einer "zweiteiligen Klauenkupplung" ist dabei eine Kupplung zu verstehen, die durch formschlüssige Kupplung funktioniert, indem Verzahnungselemente an den beiden Bremsvorrichtungsteilen miteinander in Eingriff gebracht werden und somit eine Momentübertragung in Folge einer Relativbewegung der beiden Bremsvorrichtungsteile zueinander, insbesondere in Folge einer Relativbewegung der beiden Bremsvorrichtungsteile in Rotationsrichtung zueinander, ermöglichen. Durch Realisierung der Sicherheitsbremsvorrichtung mittels einer Klauenkupplung kann eine formschlüssige Verbindung genutzt werden, um auf besonders schnelle und sichere Weise einen Bremsvorgang (Notbremsvorgang) durchzuführen. Der erste Bremsvorrichtungsteil ist in einer Ausführungsform auf der Abtriebseinheit, insbesondere auf der Abtriebswelle, im Wesentlichen drehfest angeordnet. Der zweite Bremsvorrichtungsteil ist dazu vorgesehen, im Wesentlichen drehfest mit einem anderen Bestandteil der Werkzeugmaschine, insbesondere beispielsweise einem Gehäuse, einem Getriebegehäuse, einem Motorgehäuse oder einer anderen Struktur der Werkzeugmaschine, verbunden zu sein und somit zumindest im Wesentlichen drehfest bezogen auf die Werkzeugmaschine angeordnet zu sein. In einer Ausführungsform kann der zweite Bremsvorrichtungsteil dazu vorgesehen sein, im Wesentlichen unbeweglich mit dem anderen Bestandteil der Werkzeugmaschine verbunden zu sein und somit nicht nur im Wesentlichen drehfest bezogen auf die Werkzeugmaschine angeordnet zu sein. In einem Ausführungsbeispiel ist der zweite Bremsvorrichtungsteil gegenüber einem Motorgehäuse der Werkzeugmaschine im Wesentlichen unbeweglich ausgeführt. Derart kann insbesondere eine freie Rotation des zweiten Bremsvorrichtungsteils bezüglich der Werkzeugmaschine und auch bezüglich der Abtriebseinheit, insbesondere bezüglich der Abtriebswelle, und somit bezüglich dem im Wesentlichen drehfest mit der Abtriebseinheit verbundenen ersten Bremsvorrichtungsteil unterbunden werden. Unter "im Wesentlichen drehfest" ist zu verstehen, dass ein jeweiliger Bremsvorrichtungsteil nicht wesentlich in Richtung des Umfangs der Abtriebseinheit, insbesondere der Abtriebswelle, verschiebbar (rotierbar) oder gleitend gelagert ist. Unter "der erste Bremsvorrichtungsteil ist im Wesentlichen drehfest auf der Abtriebseinheit angeordnet" ist zu verstehen, dass der erste Bremsvorrichtungsteil mit einer Drehbewegung der Abtriebseinheit, insbesondere der Abtriebswelle, mitdrehend mit der Abtriebseinheit, insbesondere der Abtriebswelle, verbunden ist, wobei durch "im Wesentlichen" eine maximale Relativbewegung von Abtriebseinheit, insbesondere Abtriebswelle, und erstem Bremsvorrichtungsteil zueinander zugelassen sein soll, die kleiner als 15°, insbesondere kleiner als 10°, ganz insbesondere kleiner als 5° ist. In einem Ausführungsbeispiel beträgt die maximal zulässige Relativbewegung des ersten Bremsvorrichtungsteils 12,5°. Insbesondere tritt diese Relativbewegung nur bei einem sehr großen anliegenden Drehmoment auf das erste Bremsvorrichtungsteil auf, wie es bei einem schlagartigen Bremsvorgang auftreten kann. Unter "der zweite Bremsvorrichtungsteil ist im Wesentlichen drehfest angeordnet, insbesondere bezogen auf die Werkzeugmaschine im Wesentlichen drehfest angeordnet" ist zu verstehen, dass eine maximale Relativbewegung von dem Bestandteil der Werkzeugmaschine, an dem das zweite Bremsvorrichtungsteil befestigt ist, und dem zweiten Bremsvorrichtungsteil zueinander zugelassen sein soll, die kleiner als 30°, insbesondere kleiner als 10°, ganz insbesondere kleiner als 5° ist. In einem Ausführungsbeispiel beträgt die maximal zulässige Relativbewegung des zweiten Bremsvorrichtungsteils 15°. Unter "Verzahnungselementen" sind konstruktiv bedingte Vorsprünge sowohl des ersten Bremsvorrichtungsteils als auch des zweiten Bremsvorrichtungsteils zu verstehen, die dazu vorgesehen sind, miteinander in Eingriff gebracht zu werden. Dabei bilden die Verzahnungselemente eines Bremsvorrichtungsteils gleichzeitig Verzahnungselemente des anderen Bremsvorrichtungsteils aufnehmende Ausnehmungen aus, sodass bei Interaktion der Bremsvorrichtungsteile Vorsprünge (Verzahnungselemente) und Ausnehmungen (Vertiefungen zwischen benachbarten Verzahnungselementen) komplementär zueinander angeordnete Paare bilden. Die Verzahnungselemente werden im Falle eines Bremsvorgangs derart miteinander in Eingriff gebracht, dass durch Momentübertragung zwischen dem an der Abtriebseinheit im Wesentlichen drehfest angeordneten (mitrotierenden) ersten Bremsvorrichtungsteil und dem gegenüber der Abtriebseinheit zumindest im Wesentlichen drehfest an der Werkzeugmaschine angeordneten zweiten Bremsvorrichtungsteil eine Momentübertragung erzeugbar ist, die der Rotationsbewegung des ersten Bremsvorrichtungsteils entgegenwirkt und derart die Rotation der Abtriebseinheit, insbesondere der Abtriebswelle, bremst, insbesondere stoppt oder blockiert. In einer Ausführungsform sind die Verzahnungselemente äquidistant und insbesondere derart am jeweiligen Bremsvorrichtungsteil vorgesehen, dass sie - bezogen auf die Drehachse der Abtriebseinheit, insbesondere der Abtriebswelle, drehsymmetrisch zu dieser angeordnet sind.

Mittels einer mechanischen Bremsstufe kann ein besonders zuverlässiger Bremsvorgang mit besonders kurzen Bremszeiten ermöglicht werden. In einer Ausführungsform der Sicherheitsbremsvorrichtung ist die zweite Bremsstufe der Bremsvorrichtung dazu vorgesehen, bei einem Bremsvorgang eine Rotation der Abtriebseinheit mindestens innerhalb von 50 Millisekunden zu stoppen, insbesondere mindestens innerhalb von 20 Millisekunden zu stoppen, ganz insbesondere mindestens innerhalb von 5 Millisekunden zu stoppen. Unter "stoppen" ist insbesondere zu verstehen, dass das Bearbeitungswerkzeug zumindest so stark abgebremst wird, dass eine verbleibende Umdrehungsfrequenz kleiner als 0,5 Hz, bevorzugt kleiner als 0,1 Hz beträgt. Bevorzugt bezeichnet "stoppen" das Erreichen des Stillstands des Bearbeitungswerkzeugs bezüglich dessen Rotationsbewegung. Der Stillstand kennzeichnet dabei das erstmalige Erreichen des Nullpunkts der Drehgeschwindigkeit der Abtriebswelle, unabhängig davon, ob anschließend noch eine (geringfügige) Rotation der Antriebswelle - beispielsweise auf Grund von Materialrelaxationseffekten - auftritt.

Ferner betrifft die Erfindung eine Werkzeugmaschine, insbesondere eine Handwerkzeugmaschine, insbesondere eine Handkreissäge mit einem als Kreissägeblatt ausgebildeten Bearbeitungswerkzeug, umfassend eine erfindungsgemäße Sicherheitsbremsvorrichtung. Auf diese Weise wird zum Abbremsen einer Bewegung, insbesondere einer Rotation, des Bearbeitungswerkzeugs eine besonders kurze Bremszeit, ermittelt zwischen einem Auslösen eines Bremsvorgangs bis zum Stoppen des Bearbeitungswerkzeugs, erreicht. Somit kann die Sicherheit eines Benutzers der Werkzeugmaschine deutlich erhöht werden. Insbesondere sind an die Situation, insbesondere an ein Verletzungsrisiko, angepasste adaptive Bremsvorgänge realisierbar, sodass auf ein stets drastisches Abbremsen verzichtet werden kann. Derart können die Komponenten der Sicherheitsbremsvorrichtung einfacher und kompakter realisiert werden und ferner länger eingesetzt werden, da eine Beanspruchung während der Durchführung eines Bremsvorgangs reduziert ist.

In einem Ausführungsbeispiel der Werkzeugmaschine weist diese ferner eine Sensorplatte auf, die eine Annäherung oder Berührung des Bearbeitungswerkzeugs durch einen Benutzer, insbesondere einen Kontakt menschlicher Haut mit dem Bearbeitungswerkzeug, detektiert. Eine Elektronik der Werkzeugmaschine initiiert nach dem Detektieren einer Annäherung oder Berührung des Bearbeitungswerkzeugs durch einen Benutzer die Auslösung des Aktorelements, welches daraufhin einen Bremsvorgang auslöst. Das Aktorelement bewegt dabei aktiv den ersten Bremsvorrichtungsteil, um die beiden Bremsvorrichtungsteile bei einem Bremsvorgang miteinander in Eingriff zu bringen und derart eine Rotation der Abtriebseinheit, insbesondere der Abtriebswelle, zu bremsen, insbesondere zu stoppen. Gleichzeitigt bewirkt das Aktorelement durch die Bewegung des ersten Bremsvorrichtungsteils die Entkopplung der Abtriebseinheit von der Antriebseinheit.

Ferner betrifft die Erfindung ein Verfahren zum Betreiben einer erfindungsgemäßen Sicherheitsbremsvorrichtung wie zuvor beschrieben, aufweisend zumindest eine Bremsvorrichtung, die dazu vorgesehen ist, bei einem Bremsvorgang eine Rotation der Abtriebseinheit zu bremsen, insbesondere zu stoppen, wobei die Bremsvorrichtung zumindest eine erste Bremsstufe und eine zweite Bremsstufe aufweist. Erfindungsgemäß wird in einem ersten Verfahrensschritt bei der Erkennung einer Annäherung eines Benutzers an das Bearbeitungswerkzeug die Rotation der Abtriebseinheit zumindest im Wesentlichen mittels der ersten Bremsstufe der Bremsvorrichtung gebremst, insbesondere gestoppt, und wird in einem zweiten Verfahrensschritt, insbesondere bei Erkennung einer weiteren Annäherung des Bearbeitungswerkzeugs durch den Benutzer oder bei Erkennung einer weiteren Annäherung des Benutzers an das Bearbeitungswerkzeug, insbesondere bei einer Berührung des Bearbeitungswerkzeugs durch den Benutzer, die Rotation der Abtriebseinheit zumindest im Wesentlichen mittels der zweiten Bremsstufe der Bremsvorrichtung gebremst, insbesondere gestoppt.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1:: eine erfindungsgemäße Werkzeugmaschine in perspektivischer Darstellung,
- Figur 2:: eine Schnittdarstellung durch Teile der Werkzeugmaschine samt erfindungsgemäßer Sicherheitsvorrichtung und Bremsvorrichtung in schematischer Darstellung,
- Figur 3:: ein Ablaufdiagramm eines beispielhaften Bremsvorgangs.

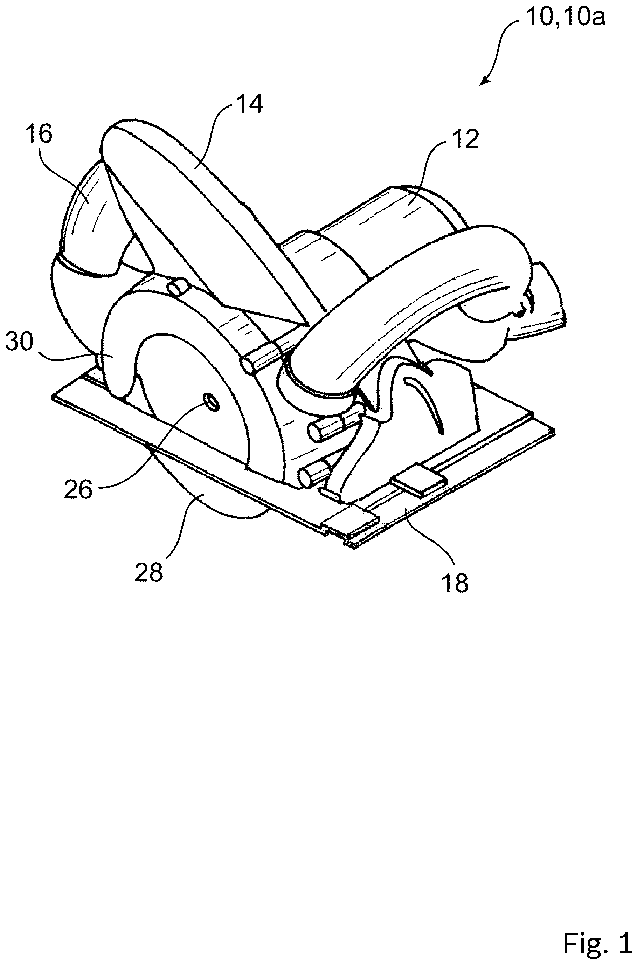

Figur 1 zeigt eine erfindungsgemäße Werkzeugmaschine 10, realisiert als Handkreissäge 10a. Es sei darauf hingewiesen, dass die Ausführungen nicht auf eine Handkreissäge 10a beschränkt zu verstehen sind, sondern die den Ausführungen zu Grunde liegenden technischen Lehren prinzipiell auch auf beliebige andere, einem Fachmann sinnvoll erscheinende Werkzeugmaschinen, insbesondere beispielsweise Bohrmaschinen, Rasenmäher, Motorsensen oder dergleichen übertragbar sind.

Die Handkreissäge 10a umfasst ein erstes Gehäuse, welches als Motorgehäuse 12 ausgebildet ist, und ein zweites Gehäuse 14. Die Handkreissäge 10a weist einen Handgriff 16 und eine Grundplatte 18 zur Führung der Handkreissäge 10a auf. Die Handkreissäge 10a weist zu ihrer Energieversorgung einen Akkumulator (hier nicht näher dargestellt) auf. In einer alternativen oder zusätzlichen Ausführungsform der Handkreissäge 10a kann auch ein stromnetzabhängiger Betrieb der Handkreissäge 10a vorgesehen sein.

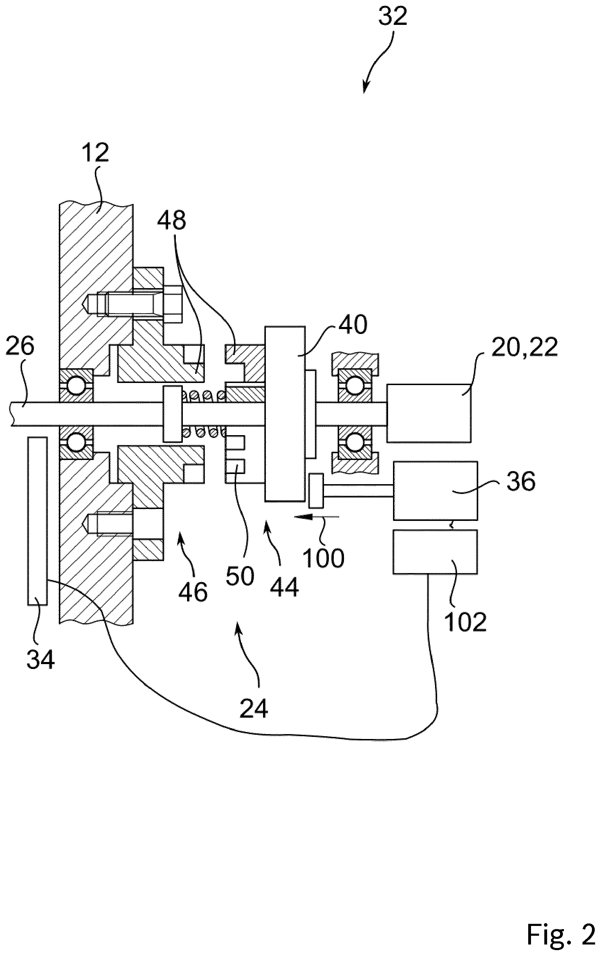

Das Motorgehäuse 12 umschließt einen Innenraum, in dem zumindest ein bürstenloser Elektromotor 20 angeordnet ist. Wie in Figur 2 dargestellt, treibt der Motor 20 über eine Abtriebswelle 26, die Teil einer Abtriebseinheit ist, ein Bearbeitungswerkzeug 28 (vgl. Figur 1) bei einem Arbeitsvorgang drehend an. Das Bearbeitungswerkzeug 28 ist hier als Sägeblatt, insbesondere als Kreissägeblatt, ausgebildet. Eine Sägeblattabdeckung 30 schützt vor einer Berührung des Bearbeitungswerkzeugs 28 und vor durch das Bearbeitungswerkzeug 28 ausgeschleuderte Werkstückspäne eines Werkstücks (vgl. Figur 1).

Eine Sicherheitsbremsvorrichtung 32 ist zum Bremsen des Bearbeitungswerkzeugs 28 vorgesehen, sobald eine Annäherung eines menschlichen Körperteils, wie beispielsweise einer Hand, mit einem Sensor 34 der Handkreissäge 10a detektiert wird. Der Sensor 34 ist in diesem Ausführungsbeispiel durch einen kapazitiv messenden Sensor realisiert. Der Sensor 34 ermöglicht eine Detektion eines sich dem Bearbeitungswerkzeug 28 nähernden Körperteils auf Grund kapazitiver Messungen (beispielsweise mittels eines Wechselfelds), wobei in Folge einer Detektion ein Detektionssignal erzeugt und an eine Steuervorrichtung der Handkreissäge 10a ausgegeben wird (Kabelverbindung in Figur 2 zwischen Sensor 34 und Elektronik 102). Derartige Sensoren sind dem Fachmann bekannt.

Die Sicherheitsbremsvorrichtung 32 weist zumindest eine erste Bremsstufe 22 und eine zweite Bremsstufe 24 auf. Die erste Bremsstufe 22 und die zweite Bremsstufe 24 sind hinsichtlich einer in einem Bremsvorgang ausübbaren Bremswirkung unterschiedlich ausgestaltet. Die erste Bremsstufe 22 der Sicherheitsbremsvorrichtung 32 ist als elektronische Bremsstufe 22 ausgebildet, indem während eines Bremsvorgangs der bürstenlose Elektromotor 20 mittels einer Gegensteuerung betreibbar ist, sodass er als Motorbremse wirkt. Im diesem Falle übt der Elektromotor 20 eine der Rotation der Abtriebswelle 26 - und eine der Eigenrotation der Motorwelle - entgegen gerichtete Kraft auf die Abtriebswelle 26 aus und bremst diese somit ab. Dabei ist die derart realisierte erste Bremsstufe 22 prinzipiell dazu vorgesehen, bei einem Bremsvorgang eine Rotation der Abtriebswelle 26 mindestens innerhalb von 200 Millisekunden zu stoppen.

Die zweite Bremsstufe 24 ist als mechanische Bremsstufe 24 mit zumindest einem mechanischen Bremselement ausgebildet. Wie dargestellt, ist die zweite Bremsstufe 24 als zumindest zweiteilige Klauenkupplung mit einem ersten Klauenkupplungsteil 44 (erster Bremsvorrichtungsteil) und einem zweiten Klauenkupplungsteil 46 (zweiter Bremsvorrichtungsteil) ausgebildet, wobei der erste Klauenkupplungsteil 44 auf der Abtriebswelle 26 im Wesentlichen drehfest und axial beweglich angeordnet ist. Der zweite Klauenkupplungsteil 46 ist im Wesentlichen drehfest, insbesondere im Wesentlichen unbeweglich, bezogen auf die Werkzeugmaschine, d.h. bezogen auf das Motorgehäuse 12, angeordnet. Der erste Klauenkupplungsteil 44 und der zweite Klauenkupplungsteil 46 weisen jeweils mehr als ein Verzahnungselement 48 auf, die dazu vorgesehen sind, bei einem Bremsvorgang ineinander in Eingriff zu stehen (hier nicht näher dargestellt) und derart eine Rotation der Abtriebswelle 26 zu bremsen, insbesondere zu stoppen. Bei einem Bremsvorgang mittels der zweiten Bremsstufe 24 wird das erste Klauenkupplungsteil 44 in Richtung des zweiten Klauenkupplungsteils 46 axial entlang der Abtriebswelle 26 bewegt (in Richtung 100). Durch die axiale Bewegung des ersten Klauenkupplungsteils 44 zu dem zweiten Klauenkupplungsteil 46 wird eine Kupplung von erstem Klauenkupplungsteil 44 und zweitem Klauenkupplungsteil 46 durchgeführt, d.h. die Kupplung wird geschlossen. Die Verzahnungselemente 48 des ersten Klauenkupplungsteils 44 und des zweiten Klauenkupplungsteils 46 greifen folglich ineinander und bilden einen Formschluss. Auf Grund des Formschlusses wirkt ein der Rotation der Abtriebswelle 26 entgegen gerichtetes Drehmoment zwischen erstem Klauenkupplungsteil 44 und zweitem Klauenkupplungsteil 46. Folglich wird die Rotation der Abtriebswelle 26 und des ersten Klauenkupplungsteils 44 gebremst, insbesondere gestoppt oder blockiert.

Im Ausführungsbeispiel der Figur 2 wird das erste Klauenkupplungsteil 44 mittels des Aktorelements 36 axial, d.h. in Richtung 100, bewegt. Das Aktorelement 36 ist hier als eine Hubeinheit ausgebildet, welche, ausgelöst durch einen Stromfluss durch die Hubeinheit, eine Hebelbewegung ausführt, wobei der erste Klauenkupplungsteil 44 in axialer Richtung 100 bewegt wird. Die Hebelbewegung findet in einer Zeit unter 5ms, insbesondere unter 1,5 ms, statt.

Die zweite Bremsstufe 24 ist hier prinzipiell dazu vorgesehen, bei einem Bremsvorgang eine Rotation der Abtriebswelle 26 innerhalb von 2 Millisekunden zu stoppen.

In einem alternativen Ausführungsbeispiel, kann die zweite Bremsstufe 24 ebenfalls als elektronische Bremsstufe 24 ausgebildet sein, beispielsweise analog zur ersten Bremsstufe 22 (vgl. oben).

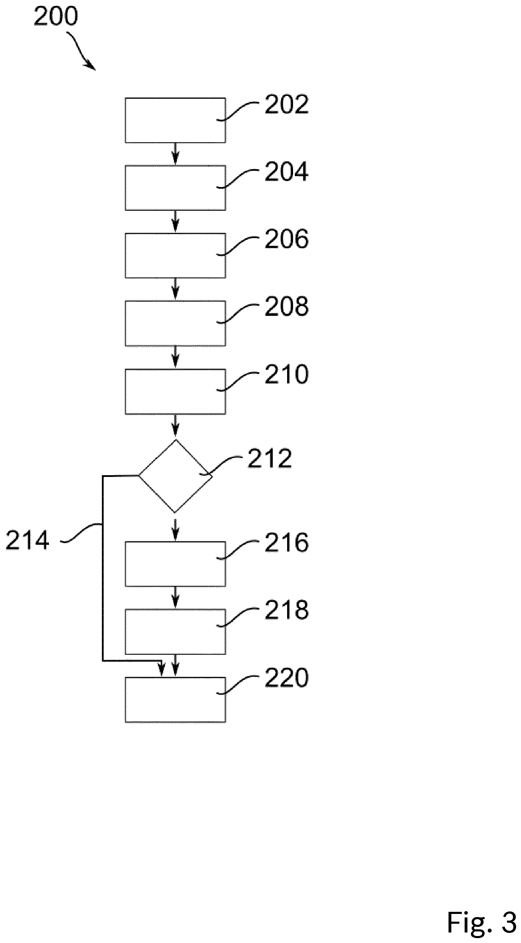

In Figur 3 ist ein Ablaufdiagramm dargestellt, das einen beispielhaften Verlauf eines Bremsvorgangs 200 unter Anwendung des erfindungsgemäßen Verfahrens zum Betreiben der Sicherheitsbremsvorrichtung 32 wiedergibt. Während des Betriebs der Werkzeugmaschine 10, insbesondere der Handkreissäge 10a, dreht das Bearbeitungswerkzeug in Ausgangssituation 202. In einem Verfahrensschritt 204 wird die Annäherung eines Benutzers an das Bearbeitungswerkzeug 28 mittels des Sensors 34 der Sensorvorrichtung detektiert. Daraufhin wird die Rotation der Abtriebseinheit, insbesondere der Abtriebswelle 26, zumindest im Wesentlichen mittels der ersten Bremsstufe 22 in Verfahrensschritt 208 nach Aktivierung des Bremsvorgangs in Verfahrensschritt 206 gebremst, insbesondere gestoppt. In Verfahrensschritt 210 detektiert der Sensor 34 eine weitere Annäherung des Benutzers an das Bearbeitungswerkzeug 28, insbesondere wird eine Berührung des Bearbeitungswerkzeugs 28 durch den Benutzer mittels des Sensors 34 detektiert. Daraufhin wird in Verfahrensschritt 212 eine Abfrage vorgenommen, ob das Bearbeitungswerkzeug bereits steht. Ist dies der Fall, wird der Bremsvorgang über den Pfeil 214 beendet, das Bearbeitungswerkzeug 28 steht im Endzustand in 220. Wird hingegen eine Rotation des Bearbeitungswerkzeugs 28 erkannt, wird in Verfahrensschritt 218 die Rotation der Abtriebseinheit, insbesondere der Abtriebswelle 26, zumindest im Wesentlichen mittels der zweiten Bremsstufe 24 gebremst, insbesondere gestoppt, nachdem in Verfahrensschritt 216 der Bremsvorgang eingeleitet wurde. Dieser nun erfolgende Notbremsvorgang mittels der zweiten Bremsstufe führt zum Stoppen des Bearbeitungswerkzeugs in Endzustand 220.

## Patentansprüche

1. Sicherheitsbremsvorrichtung (32) für eine Werkzeugmaschine (10) zum Bremsen eines mittels eines Elektromotors (20) über eine Abtriebseinheit, insbesondere eine Abtriebswelle (26), angetriebenen Bearbeitungswerkzeugs (28), aufweisend zumindest eine Bremsvorrichtung, die dazu vorgesehen ist, bei einem Bremsvorgang eine Rotation der Abtriebseinheit zu bremsen, insbesondere zu stoppen, eine Sensorvorrichtung (34) und eine Recheneinheit, die Bremsvorrichtung zumindest eine erste Bremsstufe (22) und eine zweite Bremsstufe (24) aufweist, wobei die erste Bremsstufe (22) der Bremsvorrichtung als elektronische Bremsstufe ausgebildet ist, wobei die zweite Bremsstufe (24) der Bremsvorrichtung als mechanische Bremsstufe mit zumindest einem mechanischen Bremselement ausgebildet ist, wobei die Recheneinheit dazu vorgesehen ist, in einem Bremsvorgang die erste Bremsstufe (22) anzuwenden, sobald eine Annäherung eines Benutzers an das Bearbeitungswerkzeug (28) durch eine Sensorvorrichtung (34) erkannt bzw. detektiert wird, wobei in diesem Falle die Rotation der Abtriebseinheit im Wesentlichen mittels oder unter Anwendung der ersten Bremsstufe (22) der Bremsvorrichtung gebremst, insbesondere gestoppt wird, **dadurch gekennzeichnet, dass** die Bremsvorrichtung weiterhin dazu vorgesehen ist, in einem Bremsvorgang die zweite Bremsstufe (24) anzuwenden, sobald eine weitere Annäherung eines Benutzers an das Bearbeitungswerkzeug (28) durch die Sensorvorrichtung (34) erkannt bzw. detektiert wird oder insbesondere eine Berührung des Bearbeitungswerkzeugs (28) durch ein Körperteil des Benutzers detektiert wird, wobei in diesem Falle die Rotation der Abtriebseinheit im Wesentlichen mittels oder unter Anwendung der zweiten Bremsstufe (24) der Bremsvorrichtung gebremst, insbesondere gestoppt wird.

2. Sicherheitsbremsvorrichtung (32) nach Anspruch 1, **dadurch gekennzeichnet, dass** die erste Bremsstufe (22) und die zweite Bremsstufe (24) hinsichtlich einer in einem Bremsvorgang ausübbaren Bremswirkung unterschiedlich sind.

3. Sicherheitsbremsvorrichtung (32) nach einem der vorhergehenden Ansprüche, **dadurch gekennzeichnet, dass** die erste Bremsstufe (22) der Bremsvorrichtung mittels einer Gegensteuerung des Elektromotors realisiert ist.

4. Sicherheitsbremsvorrichtung (32) nach einem der vorhergehenden Ansprüche, **dadurch gekennzeichnet, dass** die erste Bremsstufe (22) der Bremsvorrichtung dazu vorgesehen ist, bei einem Bremsvorgang eine Rotation der Abtriebseinheit mindestens innerhalb von 1000 Millisekunden zu stoppen, insbesondere mindestens innerhalb von 500 Millisekunden zu stoppen, ganz insbesondere mindestens innerhalb von 200 Millisekunden zu stoppen.

5. Sicherheitsbremsvorrichtung (32) nach einem der vorhergehenden Ansprüche, **dadurch gekennzeichnet, dass** die zweite Bremsstufe (24) der Bremsvorrichtung dazu vorgesehen ist, bei einem Bremsvorgang eine Rotation der Abtriebseinheit mindestens innerhalb von 50 Millisekunden zu stoppen, insbesondere mindestens innerhalb von 20 Millisekunden zu stoppen, ganz insbesondere mindestens innerhalb von 5 Millisekunden zu stoppen.

6. Sicherheitsbremsvorrichtung (32) nach einem der vorhergehenden Ansprüche, **dadurch gekennzeichnet, dass** die Bremsvorrichtung dazu vorgesehen, in einem Bremsvorgang zunächst die erste Bremsstufe (22) anzuwenden, falls eine Annäherung eines Benutzers an das Bearbeitungswerkzeug (28) detektiert wird, und die zweite Bremsstufe (24) anzuwenden, falls eine weitere Annäherung des Benutzers an das Bearbeitungswerkzeug (28) oder eine Berührung des Bearbeitungswerkzeugs (28) durch ein Körperteil des Benutzers detektiert wird.

7. Werkzeugmaschine (10), insbesondere Handwerkzeugmaschine (10a), mit einer Sicherheitsbremsvorrichtung (32) nach einem der vorhergehenden Ansprüche.

8. Verfahren zum Betreiben einer Sicherheitsbremsvorrichtung (32) nach einem der Ansprüche 1-6 aufweisend zumindest eine Bremsvorrichtung, die dazu vorgesehen ist, bei einem Bremsvorgang eine Rotation der Abtriebseinheit zu bremsen, insbesondere zu stoppen, wobei die Bremsvorrichtung zumindest eine erste Bremsstufe (22) und eine zweite Bremsstufe (24) aufweist, wobei in einem ersten Verfahrensschritt bei der Erkennung einer Annäherung eines Benutzers an das Bearbeitungswerkzeug (28) die Rotation der Abtriebseinheit zumindest im Wesentlichen mittels der ersten Bremsstufe (22) der Bremsvorrichtung gebremst, insbesondere gestoppt, wird, und in einem zweiten Verfahrensschritt, insbesondere bei Erkennung einer weiteren Annäherung des Benutzers an das Bearbeitungswerkzeug (28), insbesondere bei einer Berührung des Bearbeitungswerkzeugs (28) durch den Benutzer, die Rotation der Abtriebseinheit zumindest im Wesentlichen mittels der zweiten Bremsstufe (24) der Bremsvorrichtung gebremst, insbesondere gestoppt, wird.

## Claims

1. Safety brake device (32) for a power tool (10) for braking a machining tool (28) that is driven via an output unit, in particular an output shaft (26), by means of an electric motor (20), having at least one brake device which is intended to, during a braking operation, brake, in particular stop, a rotation of the output unit, having a sensor device (34) and having a processing unit, wherein
the brake device has at least a first braking stage (22) and a second braking stage (24), wherein the first braking stage (22) of the brake device is configured as an electronic braking stage, wherein the second braking stage (24) of the brake device is configured as a mechanical braking stage with at least one mechanical braking element,
wherein the processing unit is intended to, in a braking operation, apply the first braking stage (22) as soon as an approach of a user to the machining tool (28) is identified or detected by a sensor device (34), wherein, in this case, the rotation of the output unit is braked, in particular stopped, substantially by means of or through application of the first braking stage (22) of the brake device, **characterized in that** the brake device is furthermore intended to, in a braking operation, apply the second braking stage (24) as soon as a further approach of a user to the machining tool (28) is identified or detected by the sensor device (34) or, in particular, contact with the machining tool (28) by a body part of the user is detected, wherein, in this case, the rotation of the output unit is braked, in particular stopped, substantially by means of or through application of the second braking stage (24) of the brake device.

2. Safety brake device (32) according to Claim 1, **characterized in that** the first braking stage (22) and the second braking stage (24) differ in terms of a braking action able to be imparted in a braking operation.

3. Safety brake device (32) according to either of the preceding claims, **characterized in that** the first braking stage (22) of the brake device is realized by means of counteraction of the electric motor.

4. Safety brake device (32) according to one of the preceding claims, **characterized in that** the first braking stage (22) of the brake device is intended to, during a braking operation, stop a rotation of the output unit at least within 1000 milliseconds, in particular at least within 500 milliseconds, very particularly at least within 200 milliseconds.

5. Safety brake device (32) according to one of the preceding claims, **characterized in that** the second braking stage (24) of the brake device is intended to, during a braking operation, stop a rotation of the output unit at least within 50 milliseconds, in particular at least within 20 milliseconds, very particularly at least within 5 milliseconds.

6. Safety brake device (32) according to one of the preceding claims, **characterized in that** the brake device is intended to, in a braking operation, firstly apply the first braking stage (22) if an approach of a user to the machining tool (28) is detected, and apply the second braking stage (24) if a further approach of the user to the machining tool (28) or contact with the machining tool (28) by a body part of the user is detected.

7. Power tool (10), in particular a hand-held power tool (10a), having a safety brake device (32) according to one of the preceding claims.

8. Method for operating a safety brake device (32) according to one of Claims 1 - 6, said safety brake device having at least one brake device which is intended to, during a braking operation, brake, in particular stop, a rotation of the output unit, wherein the brake device has at least a first braking stage (22) and a second braking stage (24), wherein, in a first method step, in the event of an approach of a user to the machining tool (28) being identified, the rotation of the output unit is braked, in particular stopped, at least substantially by means of the first braking stage (22) of the brake device and, in a second method step, in particular in the event of a further approach of the user to the machining tool (28) being identified, in particular in the event of contact with the machining tool (28) by the user, the rotation of the output unit is braked, in particular stopped, at least substantially by means of the second braking stage (24) of the brake device.

## Revendications

1. Dispositif (32) de freinage de sécurité pour un outil-machine (10) destiné à freiner un outil de travail (28) entraîné au moyen d'un moteur électrique (20) par l'intermédiaire d'une unité d'entraînement, en particulier un arbre d'entraînement (26), présentant au moins un dispositif de freinage qui est prévu pour freiner, en particulier pour arrêter, une rotation de l'unité d'entraînement lors d'un processus de freinage, un dispositif de détection (34) et une unité de calcul, dans lequel
le dispositif de freinage présente au moins un premier étage de freinage (22) et un deuxième étage de freinage (24), le premier étage de freinage (22) du dispositif de freinage étant conçu sous la forme d'un étage de freinage électronique, le deuxième étage de freinage (24) du dispositif de freinage étant conçu sous la forme d'un étage de freinage mécanique avec au moins un élément de freinage mécanique,
l'unité de calcul étant prévue pour mettre en oeuvre le premier étage de freinage (22) dans un processus de freinage dès qu'un rapprochement d'un utilisateur vers l'outil de travail (28) est reconnu ou détecté par un dispositif de détection (34), la rotation de l'unité d'entraînement étant dans ce cas freinée, en particulier arrêtée, essentiellement au moyen ou par la mise en oeuvre du premier étage de freinage (22) du dispositif de freinage, **caractérisé en ce que** le dispositif de freinage est en outre prévu pour mettre en oeuvre le deuxième étage de freinage (24) dans un processus de freinage dès qu'un autre rapprochement d'un utilisateur vers l'outil de traitement (28) est reconnu ou détecté par le dispositif de détection (34) ou en particulier qu'un contact de l'outil de traitement (28) par une partie du corps de l'utilisateur est détecté, auquel cas la rotation de l'unité d'entraînement est freinée, en particulier arrêtée, essentiellement au moyen du deuxième étage de freinage (24) du dispositif de freinage, ou en mettant en oeuvre ce deuxième étage.

2. Dispositif (32) de freinage de sécurité selon la revendication 1, **caractérisé en ce que** le premier étage de freinage (22) et le deuxième étage de freinage (24) sont différents en ce qui concerne un effet de freinage apte à être exercé lors d'une opération de freinage.

3. Dispositif (32) de freinage de sécurité selon l'une des revendications précédentes, **caractérisé en ce que** le premier étage de freinage (22) du dispositif de freinage est réalisé au moyen d'une contre-commande du moteur électrique.

4. Dispositif (32) de freinage de sécurité selon l'une des revendications précédentes, **caractérisé en ce que** le premier étage de freinage (22) du dispositif de freinage est prévu pour, lors d'une opération de freinage, arrêter une rotation de l'unité d'entraînement au moins en moins de 1000 millisecondes, en particulier pour l'arrêter au moins en moins de 500 millisecondes, tout particulièrement pour l'arrêter au moins en moins de 200 millisecondes.

5. Dispositif (32) de freinage de sécurité selon l'une des revendications précédentes, **caractérisé en ce que** le deuxième étage de freinage (24) du dispositif de freinage est prévu pour, lors d'une opération de freinage, arrêter une rotation de l'unité d'entraînement au moins en moins de 50 millisecondes, en particulier pour l'arrêter au moins en moins de 20 millisecondes, tout particulièrement pour l'arrêter au moins en moins de 5 millisecondes.

6. Dispositif (32) de freinage de sécurité selon l'une des revendications précédentes, **caractérisé en ce que** le dispositif de freinage est prévu pour, dans une opération de freinage, mettre en oeuvre d'abord le premier étage de freinage (22) si un rapprochement d'un utilisateur vers l'outil de travail (28) est détectée, et pour mettre en oeuvre le deuxième étage de freinage (24) si un autre rapprochement de l'utilisateur vers l'outil de travail (28) ou un contact de l'outil de travail (28) par une partie du corps de l'utilisateur est détecté.

7. Outil-machine (10), notamment outil-machine à main (1 0a), comportant un dispositif (32) de freinage de sécurité selon l'une des revendications précédentes.

8. Procédé de mise en oeuvre d'un dispositif (32) de freinage de sécurité selon l'une des revendications 1 à 6, comportant au moins un dispositif de freinage prévu pour freiner, notamment arrêter, une rotation de l'unité d'entraînement lors d'une opération de freinage, le dispositif de freinage comportant au moins un premier étage de freinage (22) et un deuxième étage de freinage (24), dans lequel, dans une première étape du procédé, lors de la détection d'un rapprochement d'un utilisateur vers l'outil de travail (28), la rotation de l'unité d'entraînement est freinée au moins sensiblement au moyen du premier étage de freinage (22) du dispositif de freinage, en particulier stoppée, et dans une deuxième étape de procédé, en particulier lors de la détection d'un autre rapprochement de l'utilisateur vers l'outil de travail (28), en particulier lors d'un contact de l'utilisateur avec l'outil de travail (28), la rotation de l'unité d'entraînement est freinée, en particulier stoppée, au moins essentiellement au moyen du deuxième étage de freinage (24) du dispositif de freinage.
